# EUROPEAN PATENT SPECIFICATION

(11) **EP 4 340 599 B1**
(45) Date of publication and mention of the grant of the patent: **23.07.2025**
(21) Application number: 22728654.9
(22) Date of filing: 18.05.2022
(51) Int. Cl.: A01K 5/01, E06B 7/32, G01J 5/00, G01J 5/04, G01J 5/06, A01K 1/01, A01K 15/02, A01K 11/00

(54) **PET EQUIPMENT WITH A PET DETECTION SYSTEM**
HAUSTIERAUSRÜSTUNG MIT EINEM HAUSTIER-ERKENNUNGSSYSTEM
ÉQUIPEMENT POUR ANIMAL DOMESTIQUE AVEC SYSTÈME DE DÉTECTION D'ANIMAL DOMESTIQUE

(30) Priority: 18.05.2021 GB 202107117
(43) Date of publication of application: 27.03.2024
(73) Proprietor: Pet Mate Limited, Hersham, Surrey KT12 3PU (GB)
(72) Inventor: BROOKS, Steve, Ottershaw Surrey KT16 0ER (GB); OATES, Jeremy, Twickenham Middlesex TW2 4QA (GB)
(74) Representative: Deans, Michael John Percy
(86) International application number: PCT/GB2022/000055
(87) International publication number: WO 2022/243653

(56) References cited:
- EP-A1- 1 168 911
- CN-U- 210 869 307
- CN-U- 211 064 558
- US-A1- 2011 315 882
- US-A1- 2012 227 668
- US-A1- 2019 343 071
- US-B1- 8 854 215
- ANONYMOUS: "Pyroelectric Infrared Radial Sensor D203S", 21 January 2005 (2005-01-21), pages 1 - 6, XP093215756, Retrieved from the Internet <URL:https://www.futurlec.com/Datasheet/Sensor/D203S-e.pdf> [retrieved on 20241017]
- ANONYMOUS: "Pyroelectric Infrared Radial Sensor D203B", 28 June 2007 (2007-06-28), pages 1 - 6, XP093215754, Retrieved from the Internet <URL:https://www.futurlec.com/Datasheet/Sensor/D203B-e.pdf> [retrieved on 20241017]
- ANONYMOUS: "Pyroelectric Infrared Radial Sensor D202X", 7 February 2007 (2007-02-07), pages 1 - 5, XP093215755, Retrieved from the Internet <URL:https://www.futurlec.com/Datasheet/Sensor/PIR_D202X.pdf> [retrieved on 20241017]
- ANONYMOUS: "Pyroelectric Infrared Radial Sensor D204B", 4 December 2012 (2012-12-04), pages 1 - 6, XP093215759, Retrieved from the Internet <URL:https://www.enika.eu/data/files/Pir-D204B.pdf> [retrieved on 20241017]

## Description

This disclosure relates to a system for detecting pets, and to equipment including such detection systems.

Equipment for pets is becoming increasingly automated, and it is frequently desirable to only allow pets to use certain equipment at certain times of day or for a certain time period, and/or to only allow specific pets to use the equipment, while preventing other animals from using the equipment.

US 2012/227668 concerns an automatic animal feeding system. A covered feeding or watering bowl uncovers for an intended animal through the use of an authentication process which verifies the identity of the animal by a signal transmitted from a transmitter integrated into or onto the animal's collar when the transmitter is within the nominal range for the receiver, and a short-range proximity detector to validate that the animal is in front of the bowl in a feeding position.

EP 1168911 concerns an animal feeder having a base for holding food or water, a cover for the contents of the base, and means for detecting the presence or absence of an animal and for causing the cover to be opened, or to be allowed to close according to the relative movement between a first cam associated with the cover and a second cam responsive to the detecting means.

US 2019/0343071 concerns an animal interaction device having a base, a housing, and a feeding mechanism having a rotatable platform mounted on the top surface of the base to rotate about an axis of rotation. There is a low profile drive cavity between the platform and the base and a food tray disposed on a top surface of the platform. A drive mechanism is located within the drive cavity and includes a drive mechanism with a curved rack gear engaged with the rotatable platform. There is a horizontally disposed worm drive mounted in communication with the curved rack gear to enable rotation of the rotatable platform about the axis of rotation. As the platform is rotated, the food tray moves from a first position where the tray is concealed under the housing to a second position outside of the housing, thereby allowing access to the food tray by an animal.

US 8854215 concerns an automated pet door system. The system provides a user programmable database and system engine for controlling the passage of selected animals through a portal, such as a door, or screen, or other passage limiting device. The user provides a set of dates, times, events, or other instructions, through a user input device to establish a then current operating envelope for each of one or more selected animals. A unique identification tag, which uses active radio frequency identification tag techniques, provides identity information for each candidate animal. Multiple sensor inputs, providing information such as door position, proximity of animals to the door, and direction and velocity of animals, are provided as inputs to a decision engine, which evaluates sensor inputs over time, before determining whether to open or close the pet door.

US 2011/0315882 concerns an infrared detector based on carbon nanotubes including a detecting element, a first electrode, a second electrode, and a covering structure. The detecting element defines an absorbing part and a non-absorbing part. The detecting element includes a first end and a second end opposite with the first end. The first end is disposed in the absorbing part. The second end is disposed in the non-absorbing part. The first electrode is electrically connected with the first end. The second electrode is electrically connected with the second end. The covering structure covers the non-absorbing part.

CN 210869307 U concerns a remote pet monitoring feeding system. The feeding system comprises a collector worn on a pet, the collector having a sensor, a positioner, a first controller and a wireless transceiver. The sensor, positioner and wireless transceiver are all connected with the first controller. The feeding system further comprises an electric valve, a second controller, a wireless transceiver, a relay, a camera and a feed storage chamber. The electric valve controls a lower outlet of the feed storage chamber, one end of the relay is connected with the electric valve, the other end of the relay is connected with the second controller, and the second controller is further connected with the wireless transceiver; a mobile communication terminal is used for receiving sensing information and position information to be sent by the collector and the camera shooting information sent by the feeder; and the mobile communication terminal is also used for sending a control instruction to control the feeder to be turned on and turned off.

CN 211064558 U concerns a dog toilet comprising a body, a dustbin cover and a mass sensor. A waste box is placed on one side of the body; a rotating rod groove is formed in one side of the waste box; a rotating rod is arranged in the rotating rod groove; wherein the waste bin cover is fixedly connected with the rotating rod; a buckle is arranged on one side, far away from the rotating rod, of the waste bin cover; a clamping block is arranged on the side, away from the rotating rod groove, of the waste box. A soft plate is arranged on the side, close to the waste bin, of the main body, a bent walkway is placed on the side, away from the main body, of the soft plate, a paper rubbing wheel is arranged on the side, close to the soft plate, of the main body, a urinal pad groove is formed in the side, close to the paper rubbing wheel, of the main body, and a urinal pad is placed in the urinal pad groove. After a certain used urinal pad is stored in the waste box, the buckles are pulled, the buckles are moved out of the clamping blocks, the waste box cover is opened from the waste box, and the waste box is convenient to clean.

In accordance with a first aspect of this disclosure not forming part of the claimed invention, there is provided a pet detection system for domestic pets, the pet detection system comprising a passive infrared detector; the passive infrared detector comprising two photoelectric passive infrared sensors, one of which is covered, so that the covered detector always detects ambient temperature, a difference between the sensors being indicative of a live object being detected.

Preferably, the two passive infrared sensors are identical.
In a second and alternative aspect of this disclosure not forming part of the claimed invention, there is disclosed a pet detection system for domestic pets, the pet detection system comprising a capacitive proximity detector positioned to detect a live object.

In accordance with the invention as defined by claim 1, there is provided an equipment for a domestic pet having a first state and a second state, the equipment further comprising a pet detection system, the pet detection system comprising a capacitive proximity detector positioned for detecting a live object, and a pet authorisation system,
the pet authorisation system determining whether the live object so detected is an authorised pet, and,
if the live object is an authorised pet, causing the equipment to be in its first state, and if the live object is not an authorised pet causing the equipment to be in its second state.

The pet authorisation system comprises an RFID aerial that is coupled to a radio frequency circuit to detect the presence of an authorised RFID chip when the pet detection system detects a live object, but is otherwise decoupled therefrom;
and the decoupled RFID aerial serves as the said capacitive proximity detector being connected into a capacitance measurement circuit at least when so decoupled.

When the equipment is a pet feeder, the first state may allow a pet access to food within the feeder, and the second state not allow a pet access to food within the feeder.
When the equipment is a pet flap, the pet flap may be unlocked in the first state, and locked in the second state.

Although the detailed description hereinbelow and the accompanying drawings relate to specific pet feeders, it will readily be understood that the pet detection systems disclosed could equally well be used in any type of pet equipment where detection of a pet (optionally followed by determining if a pet is an authorised pet or not) is desired. Such equipment could include but is not limited to: pet feeders, pet flaps, litter trays, interactive toys or games for pets, for example automated ball throwers; doors that are to be opened for a pet upon detection of a pet (including internal and external doors mainly aimed for human use, cupboard doors, etc).

Accordingly, reference may be made, by way of example only, to the description hereinbelow of specific embodiments of feeder in accordance with the various teachings of this disclosure, with reference to the accompanying drawings, in which:
Fig. 1 shows an embodiment of a pet feeder in accordance with teachings of this disclosure, as seen from the front and the left;
Fig. 2 shows the pet feeder of Fig. 1 as seen from the rear and the right;
Fig. 3 is a top plan view of the feeder of Figs. 1 and 2;
Fig. 4 is a front elevational view of the feeder of Figs. 1 to 3;
Fig. 5 is a view from above of a cat approaching the food container of a feeder with the feeder shown in phantom lines apart from its RFID loop aerial;
Fig. 6 is a view similar to that of Fig. 5 but as seen from the right side;
Fig. 7 is an exploded view of one practical embodiment of pet feeder in accordance with teachings of this disclosure;
Fig. 8 is a schematic view of a pet feeder as seen from the right showing two potential positions for a loop aerial extending across the right sidewall of the feeder;
Fig. 9 is a perspective view from the front above and to the right illustrating the fitting of a sprung pin connector in a pivot in the left sidewall of the feeder;
Fig. 10 is a view from the right, with parts omitted or in phantom for clarity showing a cover in its closed position and a linkage for moving it;
Fig. 11 is a view similar to Fig. 10 with the cover in its open position;
Fig. 12 is a front left perspective view of an alternative practical embodiment of pet feeder in accordance with teachings of this disclosure;
Fig. 13 is a rear right perspective view of the feeder shown in Fig. 12;
Fig. 14 is an exploded view of the feeder shown in Figs. 12 and 13;
Fig. 15 is a front left perspective view of a feeder wherein the cover has a retainer for retaining food;
Fig. 16 is the cover of the feeder of Fig. 15 in a first orientation;
Fig. 17 is the cover of the feeder of Fig. 15 in a second orientation;
Fig. 18 shows a feeder with two aperture adjusters decreasing the width of the aperture into the housing of the feeder: and
Figs. 19 and 20 are perspective views from slightly different positions illustrating a cat flap for mounting in an opening through a door and provided with a PIR pet detector.

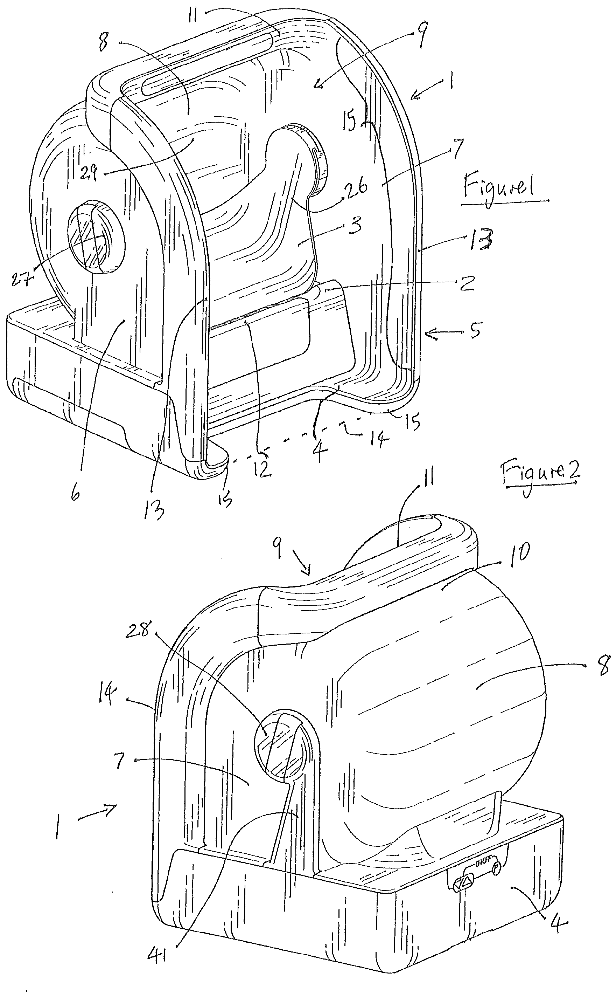

The embodiment of pet feeder 1 shown in Figs 1 to 4 includes a container 2 for pet food, preferably removable from the feeder for cleaning, together with a movable cover 3 shown in its closed position in these Figures. The container 2 is mounted in the base 4 of a housing 5 comprising the base 4, left 6 and right 7 sidewalls and a rear wall 8 coupled to the base 2 and sidewalls 6, 7. As will be apparent from these Figures, the housing 5 has an open front 9. In this embodiment, the rear wall 8 extends upwardly from the base and forwardly to provide a partial roof 10 for the housing 5, but a partial roof may not always be necessary, as the open front 9 is sized to allow only one pet, suitably a cat, at a time to approach the food container 2 through the open front 9, while the rear wall 8 and the sidewalls 6, 7 prevent a second pet reaching the food while the first pet is present.

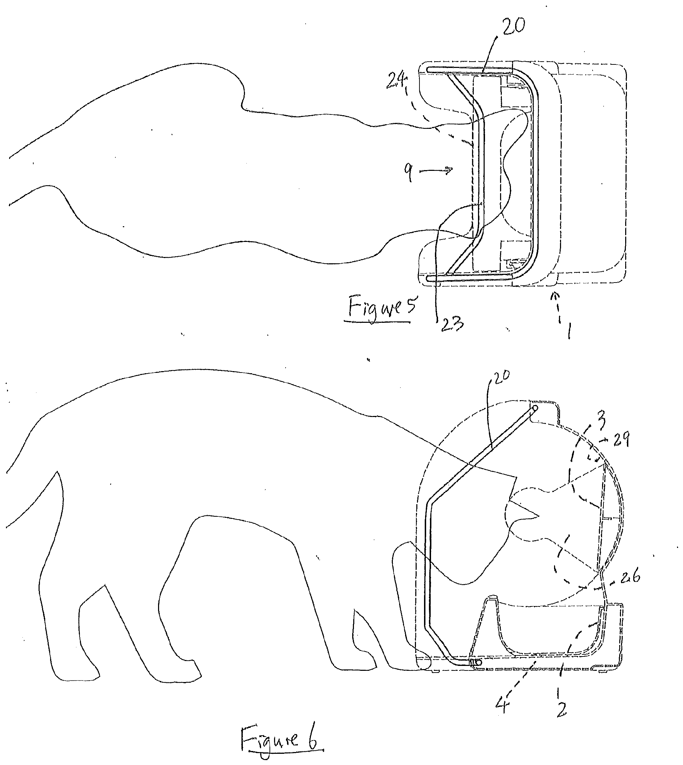

In this embodiment, roof 10 terminates in a forward edge 11 which is vertically above the food container 2, and the sidewalls 6, 7 extend forwardly beyond forward edge 12 of the food container. Thus, while still being protected from approach by other pets at the sides and rear, a feeding cat will not feel enclosed because the housing is open above as far as the food container, as can readily be seen from Figs. 5 and 6.

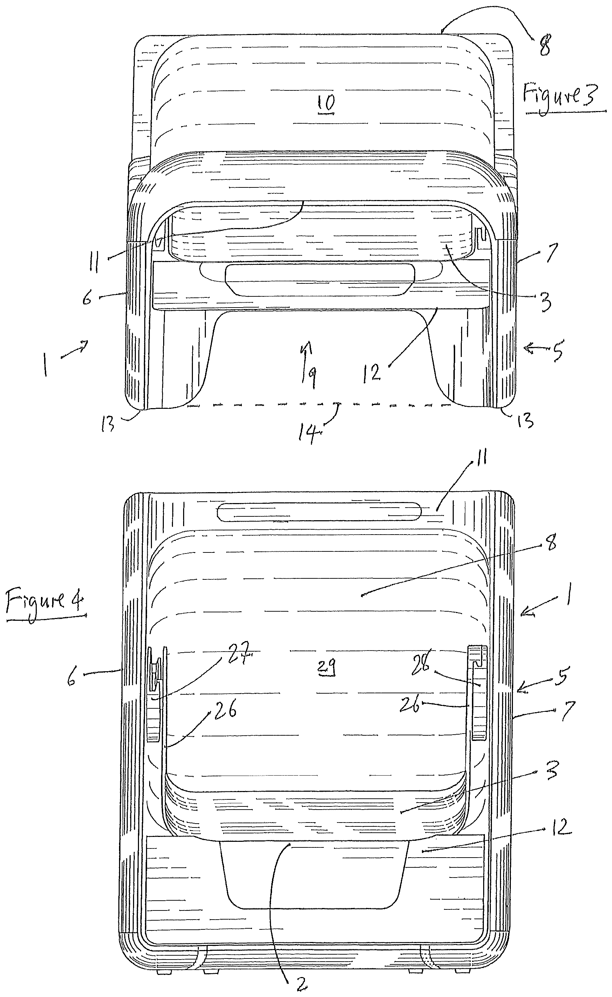

As best shown in Figs. 1 and3, the open front 9 is bounded by the forward edge 11 of the roof 10, forward edges 13 of the respective side walls 6, 7, and a line 14 shown in hatched lines in the top plan view of Fig. 4 which effectively extends between the bottoms 15 of the forward edges 13 of the sidewalls. Line 14 is parallel to forward edge 11 of the roof 10, so that line 14 and forward edge 11 lie in a common plane. It can readily be seen that the sidewalls 6, 7 have intermediate portions located at positions between forward edge 11 and line 14 that extend more forwardly than this plane. Not only does this geometry provide good protection for a feeding cat from the sides, but it also confers other technical benefits as explained below.

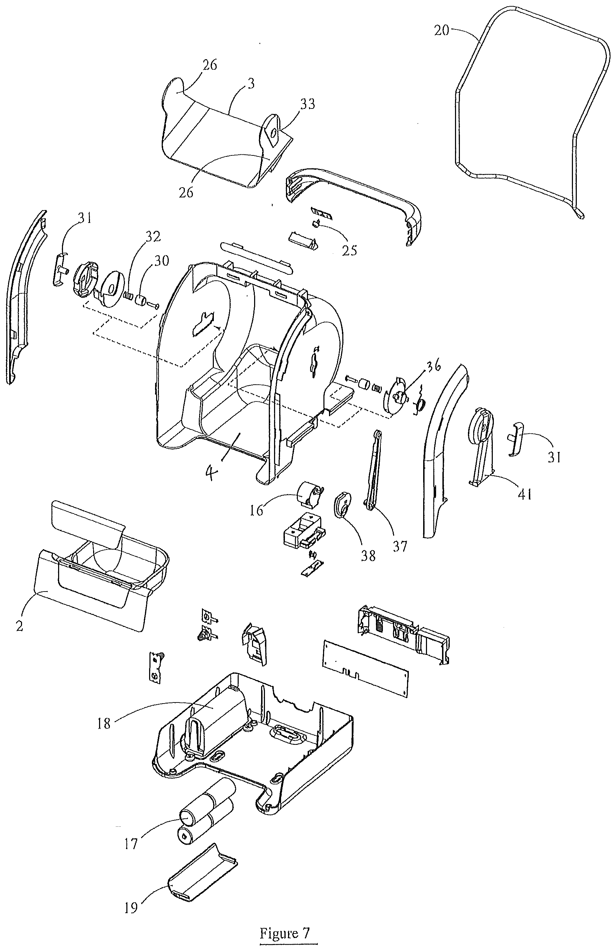

Referring to the exploded view of Fig. 7, cover 3 is coupled to a motor 16, preferably a step motor, for movement between a closed position covering the container 2 and an open position under control of one or both of a pet detection system and a timer. Motor 16 is preferably battery driven so that there are no restrictions required by a power lead and availability of a mains electric supply on where the feeder 1 may be placed, replaceable batteries 17 being mounted in a battery compartment 18 with a removable cover 19.

The preferred pet detection system is an RFID system comprising an RFID loop aerial 20 to detect an authorised RFID mounted subcutaneously in the back of the neck of a pet approaching the open front 9. Because some cats are rather diffident in approaching their food bowl anyway, and would be even more reluctant to approach a closed food container with an opening cover, it is important that the cover be moved to its open position as soon as possible and as inconspicuously as possible in a manner that does not frighten the cat as an authorised cat approaches the feeder. In turn, this means that the aerial must detect an authorised RFID chip as far forward of the food container as possible.

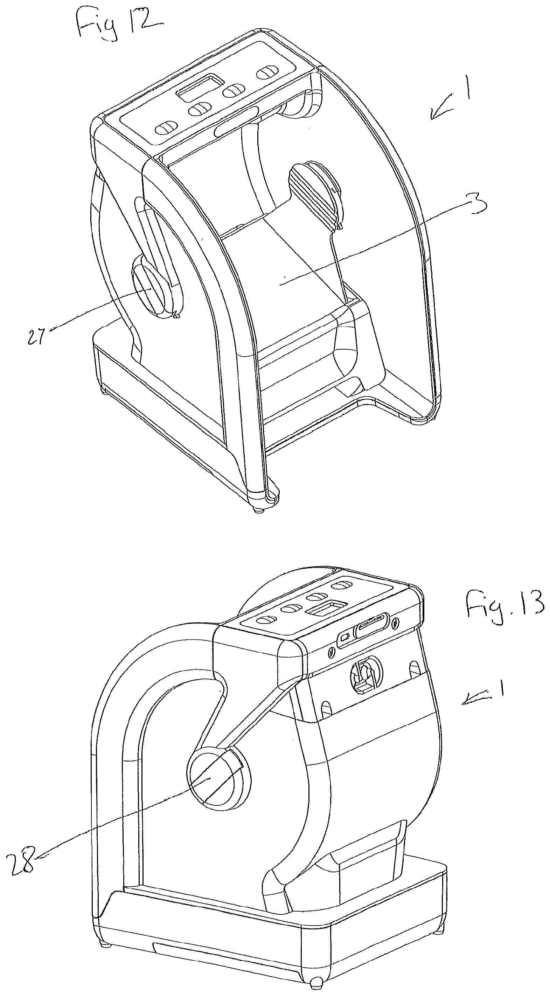

In the RFID controlled feeder disclosed in WO 2015/028794, the loop aerial is located in a frame through which the cat's head must pass to reach food. This frame is swept backwardly at a substantial angle (See Fig. 12 of WO 2015/028794) which makes it difficult for the upper portion of the loop to sense an RFID chip. The top third of the loop is particularly important in sensing a subcutaneous chip at the back of a cat's neck if the frame is sized proportionately to the size of a domestic cat.

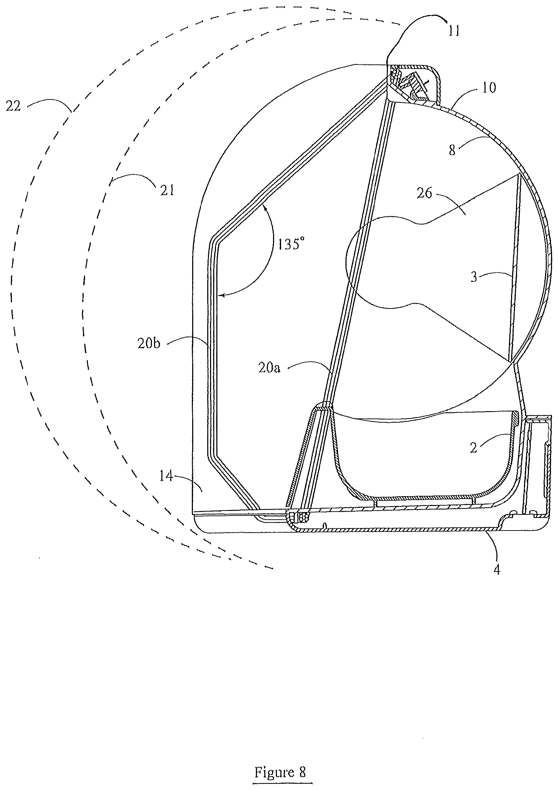

We have carried out experiments with the feeder shown in Figs. 1 to 4 of the present Application, placing the loop aerial in two alternative positions shown in Fig. 8. When a loop aerial 20a extends at an angle across the respective sidewalls from a lower portion of the sidewall to the forward edge of the roof, albeit at less of an angle than that of the swept back loop of WO 2015/028794, RFID chips can be reliably sensed out to a first distance represented schematically by the curve 21 in Fig. 8. However, when the loop aerial extends across the sidewall in a plurality of generally straight sections as shown at 20b, the distance at which RFID chips can be reliably sensed, as indicated schematically by curve 22 is significantly increased. That this should prove to be so especially in the top third of the loop is somewhat surprising given that the upper reach of the loop along the forward edge of the roof is in the same position for loops 20a and 20b.

In loop 20b, there are two major generally straight loop sections and a minor generally straight section which we regard as optional. We have found that for best results the angle between the two major generally straight sections is around 135°. Put another way, this angle is suitably between 100° and 170°, preferably between 110° and 160°, and most preferably between 120° and 150°.

It will readily be appreciated that a loop aerial 20 such as loop 20b extending across the side walls at positions adjacent the forward edges of the side walls is only possible if the sidewalls 6, 7 have intermediate portions 15 located at positions between forward edge 11 of the roof and line 14 that extend more forwardly than the plane containing edge 11 and line 14, so that the shape of the sidewalls has an important bearing on the ability to provide an RFID loop aerial with enhanced ability to sense the presence of a pet with an authorised RFID chip. As an alternative to a plurality of generally straight sections in the sidewalls, the aerial may extend in each sidewall in a curve following the forward edge of the sidewall.

The most preferred geometry for the RFID loop aerial 20 is shown in Figs 5 and 6. It will be noted from the vertical view of Fig. 5 that lower run 23 of loop 20 follows forward edge 24 of base 4, which is recessed backwardly from the open front 9 so that there is an absence of any step or level change presented to a cat as it enters through the open front. We have found that some cats are put off by such a step, such as that presented at the lower part of the open front of the feeder of WO 2015/028794.

To keep the power consumption low to allow for the feeder to be battery operated, the RFID detection system should be in sleep mode most of the time, only searching when a pet comes close. This can be achieved by the use of a detector adapted to activate the RFID aerial when a pet is detected in the vicinity of the open front of the feeder. Suitable such detectors are passive infrared (PIR) detectors. Conventional PIR detectors sense a temperature difference between two sensors. However, we have found that conventional PIR detectors with two PIR sensors A and B positioned behind a facetted lens which splits up the detection area into a plurality of adjacent regions sensed by sensors A and B, are not suitable for use with our feeder. With such conventional PIR detectors, presence of a moving live object is determined by the object crossing from an A region into a B region or vice-versa. This system works well at a distance, but if fitted to a feeder as shown in Figs. 1 to 4 to sense a pet adjacent the open front of the feeder, the pet will inevitably cross several A and B regions, and no temperature difference will be detected. Accordingly, in our preferred arrangement, we use a PIR detector 25 (Fig. 7) or Pyroelectric Infrared Radial Detector with dual compensated sensors, one of which we cover, so that the covered sensor always detects ambient temperature, a difference in sensed temperature between the sensors being indicative of a live object being detected. We have found various PIR detectors to be useful, including the widely available PIR_D202X, PIR_D203B and PIR_D203S detectors from various suppliers, the latter being preferred. Thus, we can produce a cheap and reliable PIR detector that detects a cat close to the sensor and self compensates for changes in ambient temperature and in battery voltage simply by removing the facetted lens from a conventional PIR detector and covering one of its two PIR sensors. The PIR detector is preferably positioned at the top of the feeder. Cats are prone to rubbing themselves against objects, including feeders, and particularly the sides of feeders. Applicant has found that PIR detectors will be kept cleaner for longer the higher up the feeder they are positioned.

As a less preferred alternative to the above PIR detector, other embodiments employ a detector using a capacitive proximity system, or a touch mat located at the front of the feeder. In the preferred capacitive proximity system of the equipment according to the claimed invention, the RFID aerial 20 is coupled to a radio frequency circuit when the capacitive proximity detector senses an animal in the vicinity of the feeder but is otherwise be decoupled therefrom, and the decoupled RFID aerial serves as the capacitive proximity detector being connected into a capacitance measurement circuit at least when so decoupled.

In some embodiments of feeder 1, where discrimination between different pets approaching the feeder is unnecessary, the feeder dispenses with the RFID detection system in its entirety, and simply employs a pet detector to cause the or each motor to move the cover 3 from closed to open positions when a pet is detected in the vicinity of the open front of the feeder. The above described PIR detector or capacitive proximity detector may be used for this purpose.

In any of the aforesaid embodiments, the feeder 1 may additionally employ a timer, and the cover 3 is only openable during one or more selected windows of time. In one such arrangement, the aerial and/or the PIR detector are only coupled to the power supply during the said window(s). The feeder may provide a visual and/or audible signal that a pet may be trained to notice as an indication that the feeder is operable to allow them to reach the food within it.

We also contemplate embodiments in which a timer, with or without an additional visual and/or audible signal, defines cover-open periods and cover-closed periods, operating the or each motor accordingly, without need of an RFID detector system or a PIR detector system.

As noted above, it is important that the cover 3 be moved to its open position as inconspicuously as possible in a manner that does not tend to frighten a cat. As will be seen from Figs. 1 to 4, although not always necessary, in our preferred arrangement the cover 3 is generally U-shaped with respective arms 26 pivotally mounted to respective pivots 27, 28 in the left 6 and right 7 sidewalls. The motor 16 is coupled to the cover 3 to cause pivotal movement of the cover from its closed position (as shown in Figs. 1 to 4) to its open position (as shown in Figs. 5 and 6) in a direction away from the open front 9 and generally along an inner surface 29 of the rear wall 8. By using a pivotable cover, the cover 3 simply rolls away from a pet in contrast to rising up in a folding motion as in WO 2015/028794. In practice our cover 3 is suitably made of the same material as the housing and is similarly coloured to be as unnoticeable as possible.

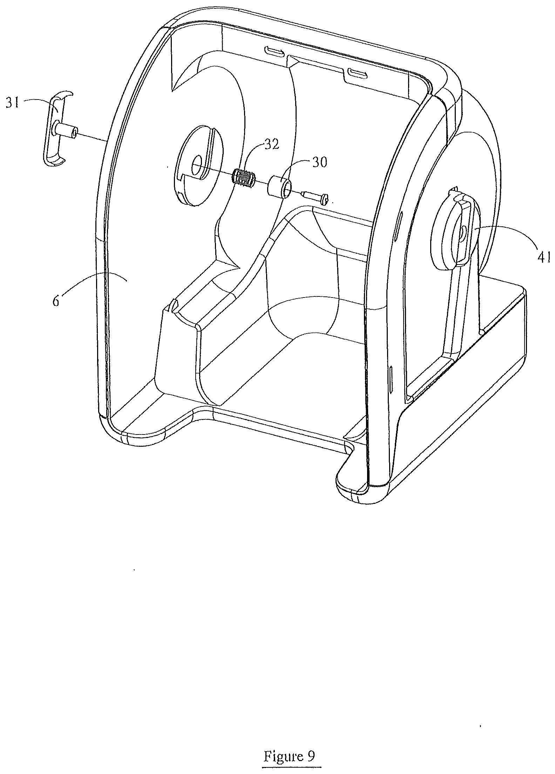

In preferred embodiments, the cover is removable from the housing for cleaning. Fig. 9 shows how a sprung pin fitting, with a pin 30 coupled to an external clip 31 on the outer side of left sidewall 6 via an intermediate spring 32 between the pin 30 and the inner surface of the sidewall, may be fitted. The pins 30 fit into blind holes 33 (Fig. 7) in the arms 26 of the cover 3. Pulling the respective clips outwardly compresses the springs and withdraws the pins from the blind holes to release the cover.

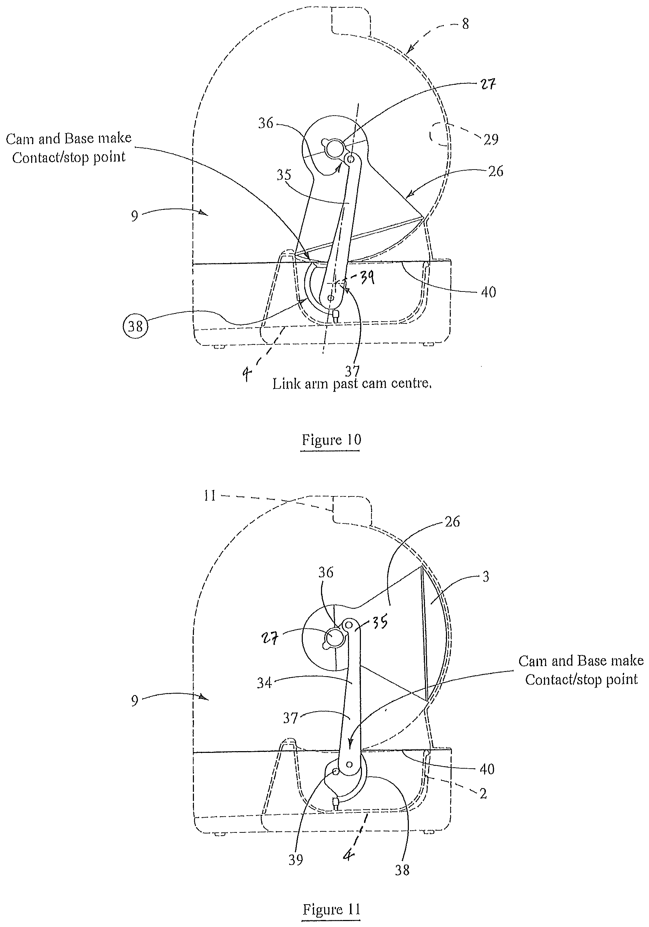

Motor 16 is coupled to the cover 3 by a linkage coupled to at least one of the pivots. In the illustrated embodiment shown in Figs. 10 and 11, linkage 34 is coupled to pivot 27 and comprises a link arm 35 with two pivoted links 36 and 37 and a rotatable drive cam 38. The shorter link 36 is coupled to the pivot, while the longer link 37 is pivoted to the cam, which is coupled to motor axle 39. As can be seen from Fig. 10, when the cover is in its closed position, link 37 is positioned past dead centre of the cam. The result is that a pet attempting to open the cover by pushing at its forward edge will be ineffective in moving the cover. Stop points for travel of the cover in its open and closed positions are defined by edges of the cam making contact with the underside of a top wall 40 of the base 2, as shown in Figs. 10 and 11. Preferably three positions are defined, namely: a) closed, b) open for pet to feed, and c) fully open to allow the food container to be removed. The linkage 34 is mounted on the outer side of sidewall 7 beneath a cover 41 to prevent the mechanism being contaminated by food.

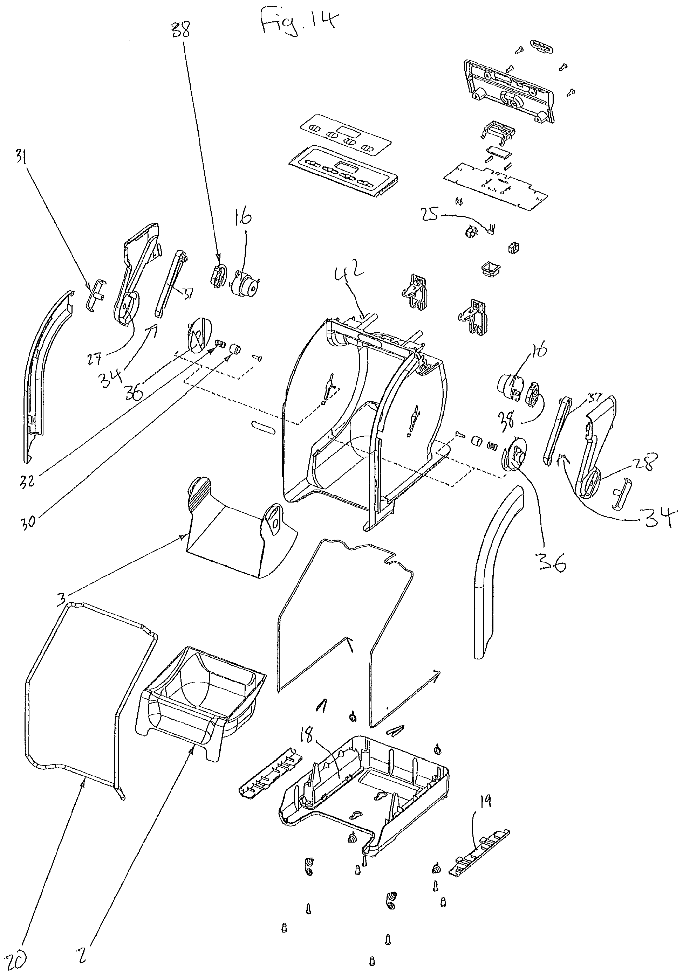

Figs. 12-14 show an embodiment of a feeder 1 which includes two motors 16. Each motor 16 is coupled to the cover 3 by a linkage 34 connected to one of the pivots 27, 28 in the manner shown in Figs. 10 and 11, namely that each linkage 34 is coupled to a pivot 27, 28 and comprises a link arm 35 with two pivoted links 36 and 37 and a rotatable drive cam 38. Each shorter link 36 is coupled to the pivot, while each longer link 37 is pivoted to the cam, which is coupled to motor axle 39. As is shown in Fig. 10, when the cover is closed position, each link 37 is positioned past dead centre of the cam. The result is that a pet attempting to open the cover by pushing at its forward edge will be ineffective in moving the cover. Stop points for travel of the cover in its open and closed positions in the embodiment of Figs. 12-14 are defined by edges of the cams 38 making contact with a stop (not shown) in the upper part 42 of the feeder. It will be understood that although the embodiment of Figs. 12-14 has the motors and cams provided at the top of the feeder, these could instead be provided at the base of the feeder, or anywhere else in the feeder that it is desired. Likewise, although the embodiment of feeder with one motor has the motor depicted at the base of the feeder, if a single motor is used that motor could instead be provided at the top of the feeder, or anywhere else in the feeder that it is desired. One advantage provided by the use of at least two motors, each motor being coupled to the cover by a linkage coupled to at least one pivot and comprising a link arm and a rotatable drive cam, the link arm being connected to the cam so that when the cover is in its closed position, the link arm is positioned past dead centre of the cam is the result that that pushing the forward edge of the cover by a pet is ineffective in moving the cover, which enables more secure locking of the cover in its closed position covering the container.

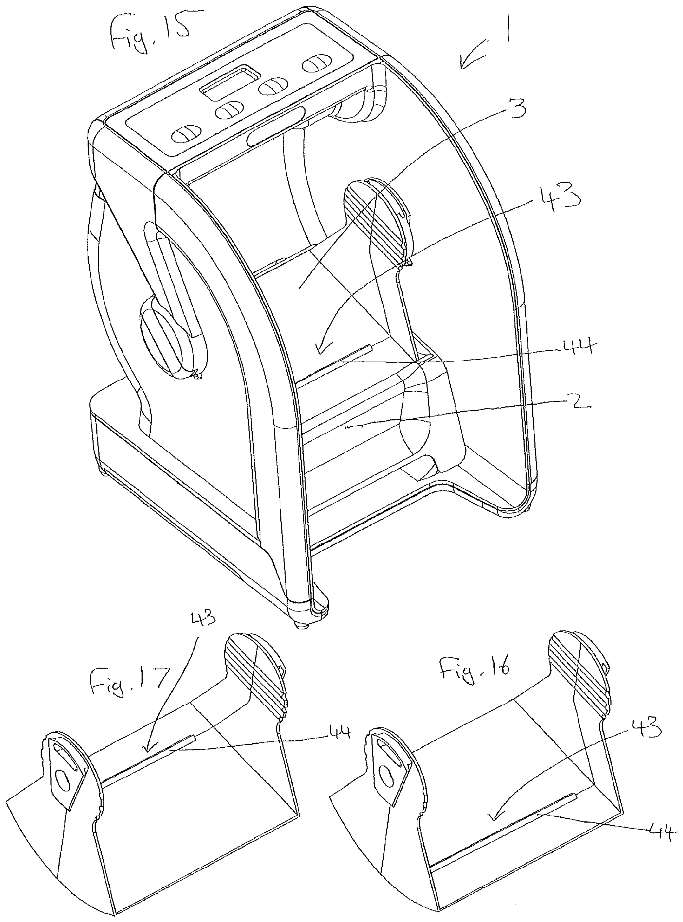

Fig. 15 shows a feeder 1 with a cover 3 in a closed position preventing access to a container 2 that is suitable for holding a first portion of pet food. Cover 3 is pivotable to an open position to allow access to the first portion of pet food. Cover 3 includes a retainer 43 for holding a second portion of pet food. Retainer 43 is formed, in this preferred embodiment, by cover 3 and a retaining wall 44. When cover 3 is in its closed position, food can be placed on top of the cover 3, and the food is held on the cover (in the cover's closed position) by wall 44. When cover 3 is pivoted to its open position, any food that was present in retainer 43 will fall past the wall 44 and land in container 2. Providing a feeder in which a quantity of food can be provided very clearly to a pet through sight and smell entices a pet to approach the feeder to eat the food that the pet has detected in the retainer 43. This provides an aid for training a pet to use a feeder that has a "hidden" portion of food that is revealed somehow, whether by a timer, a motion sensor, an RFID detector, or any combination of the above or any other suitable means of providing intermittent access to a container that contains pet food. Pets that are hesitant to approach or put their heads into a feeder where there is no readily accessible food are more likely to approach and put their heads into a feeder where there is readily accessible food.

For extremely skittish pets, a feeder as shown in Fig. 15 could be introduced by only providing food in retainer 43, and by temporarily disabling the opening of cover 3. Once a pet is comfortable eating food from retainer 43 on the top of cover 3, the opening of cover 3 could be introduced.

Figs. 16 and 17 show the cover 3 of Fig. 15 in two different orientations. Fig. 16 shows the cover 3 in the orientation used in Fig. 15, in which wall 44 and therefore retainer 43 are provided near the front of the feeder. Cover 3 could alternatively be mounted so that wall 44 and therefore retainer 43 are provided near to the rear of the feeder. When the cover is mounted in the orientation shown in Fig. 17, any food that was present in retainer 43 will still fall past the wall 44 and land in container 2 when cover 3 is rotated to its open position.

Providing a cover that can be mounted in two ways provides two different ways for owners to get their pet or pets used to the feeder and thus provides flexibility for different pets. One advantage provided by providing retainer 43 near to the rear of the feeder is for training pets to use a feeder that is RFID controlled and therefore where the feeder needs to read the microchip in a pet. If a microchip has been placed further back in the pet than is standard, the pet would need to be trained to put their head further into a feeder before their microchip could be successfully read, enabling the majority of their food to be revealed.

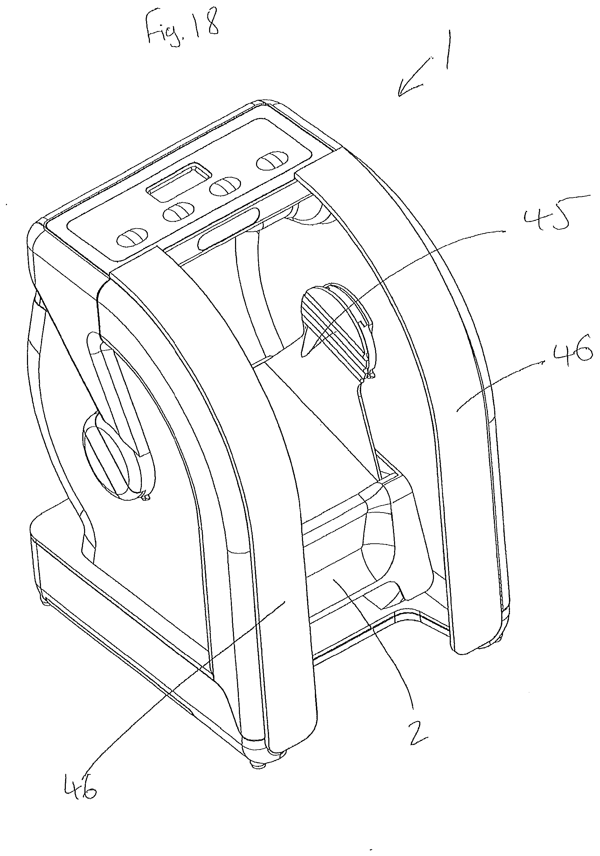

Fig. 18 shows a feeder for domestic pets, the feeder comprising an aperture 45 in the housing of the feeder, the aperture 45 allowing a pet access to pet food within container 2 within the housing. As shown in Fig. 18, the width of aperture 45 has been adjusted by fastening two aperture adjusters 46 to the housing so that the aperture 45 is partially occluded. In the preferred embodiment shown in Fig. 18, two aperture adjusters are provided, but it will be understood that using a single aperture adjuster would still reduce the size of the aperture. Each aperture adjuster 46 has a fastener (of any suitable sort) to fasten the adjuster to the feeder. In the embodiment of Fig. 18, the aperture adjusters are made from polypropylene, but other plastics would be suitable. Preferably, the aperture adjusters are trimmable to a desired size by a pet owner, using scissors, or a knife. Alternatively, two or more differently sized aperture adjusters could be provided, that would result in different size apertures.

It will be understood that any of the other above embodiments of pet feeders could be provided with one or more aperture adjusters that allow for adjustability of the width of the feeder.

Any of the above embodiments of pet feeders could additionally be provided with connectivity that enables them to be monitored (for example to monitor wanted usage by a pet with an authorised RFID and/or unwanted usage, or to monitor battery life) or controlled remotely (for example to adjust any settings of the feeder, or to provide an override to open the feeder even when no authorised RFID chip is present, to provide software updates) by any suitable means, including but not limited to: a remote control, a smartphone, a tablet, etc.

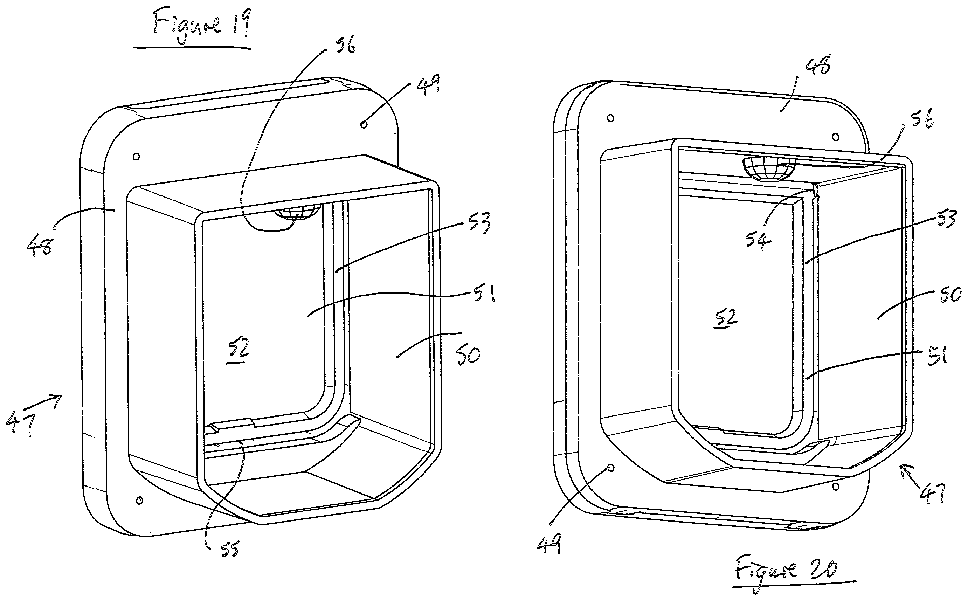

Turning now to Figs. 19 and 20, there is shown a cat flap assembly 47 adapted for fitting in a through opening in the lower part of a door. The assembly includes a back plate 48 adapted to be fitted to the inner side of a door by fastening means such as screws extending through apertures 49 in the back plate and into the door. The assembly also includes a shroud 50 adapted to pass through the opening and adapted to fit into a front plate (not shown) with an opening corresponding to the profile of the shroud. A flap 51 with a clear window 52 mounted in a surround 53 is supported on a horizontal pivot 54 at the upper interior of the shroud to allow passage therepast of a cat in either direction. The foot of flap 51 interacts with a locking mechanism 55. The locking mechanism is controlled by a PIR detector 56 with dual compensated sensors, as described hereinabove for use in our pet feeder. One of the sensors is covered, so that the covered sensor always detects ambient temperature, a difference in sensed temperature between the sensors being indicative of a live object being detected.

## Claims

1. Equipment (1, 47) for a domestic pet, the equipment (1, 47) having a first state and a second state,
the equipment (1, 47) further comprising:
a pet detection system, the pet detection system comprising a capacitive proximity detector positioned for detecting a live object; and
a pet authorisation system adapted to determine whether the live object so detected is an authorised pet, and, if the live object is an authorised pet, to cause the equipment (1, 47) to be in its first state, and if the live object is not an authorised pet to cause the equipment (1, 47) to be in its second state;
the pet authorisation system comprising an RFID aerial (20) that is coupled to a radio frequency circuit to detect the presence of an authorised RFID chip when the pet detection system detects a live object, but is otherwise decoupled therefrom;
**characterised in that** the decoupled RFID aerial (20) serves as the said capacitive proximity detector being connected into a capacitance measurement circuit at least when so decoupled.

2. Equipment (1, 47) for a domestic pet according to Claim 1, wherein the equipment (1, 47) is a pet feeder (1), and wherein the first state allows a pet access to food within the feeder (1), and the second state does not allow a pet access to food within the feeder (1).

3. Equipment (1, 47) for a domestic pet according to Claim 1, wherein the equipment (1, 47) is a pet flap (47), and wherein, in the first state the pet flap (47) is unlocked, and in the second state the pet flap (47) is locked.

## Patentansprüche

1. Ausrüstung (1, 47) für ein Haustier, wobei die Ausrüstung (1, 47) einen ersten und einen zweiten Zustand aufweist und ferner Folgendes umfasst: ein Haustiererkennungssystem, wobei das Haustiererkennungssystem einen kapazitiven Näherungsdetektor zur Erkennung eines lebenden Objekts umfasst; und ein Haustierautorisierungssystem, das feststellt, ob es sich bei dem erkannten lebenden Objekt um ein autorisiertes Haustier handelt, und, falls es sich um ein autorisiertes Haustier handelt, die Ausrüstung (1, 47) in den ersten Zustand versetzt; und, falls es sich nicht um ein autorisiertes Haustier handelt, die Ausrüstung (1, 47) in den zweiten Zustand versetzt; das Haustierautorisierungssystem umfasst eine RFID-Antenne (20), die mit einem Hochfrequenzkreis gekoppelt ist, um das Vorhandensein eines autorisierten RFID-Chips zu erkennen, wenn das Haustiererkennungssystem ein lebendes Objekt erkennt, ansonsten jedoch davon entkoppelt ist; **dadurch gekennzeichnet, dass** die entkoppelte RFID-Antenne (20) als kapazitiver Näherungsdetektor dient und zumindest im entkoppelten Zustand an einen Kapazitätsmesskreis angeschlossen ist.

2. Ausrüstung (1, 47) für ein Haustier nach Anspruch 1, wobei die Ausrüstung (1, 47) ein Futterautomat (1) ist und der erste Zustand dem Haustier Zugang zum Futter im Futterautomaten (1) ermöglicht und der zweite Zustand dem Haustier den Zugang zum Futter im Futterautomaten (1) verwehrt.

3. Ausrüstung (1, 47) für ein Haustier nach Anspruch 1, wobei die Ausrüstung (1, 47) eine Haustierklappe (47) ist und die Haustierklappe (47) im ersten Zustand entriegelt und im zweiten Zustand verriegelt ist.

## Revendications

1. Équipement (1, 47) pour animal domestique, cet équipement (1, 47) présentant un premier et un second état ; il comprend également : un système de détection d'animal domestique, comprenant un détecteur de proximité capacitif positionné pour détecter un objet vivant ; et un système d'autorisation d'animal domestique conçu pour déterminer si l'objet vivant ainsi détecté est un animal autorisé et, si tel est le cas, pour placer l'équipement (1, 47) dans son premier état ; et, si tel n'est pas le cas, pour placer l'équipement (1, 47) dans son second état ; le système d'autorisation d'animal domestique comprenant une antenne RFID (20) couplée à un circuit radiofréquence pour détecter la présence d'une puce RFID autorisée lorsque le système de détection d'animal domestique détecte un objet vivant, mais en étant par ailleurs découplée ; **caractérisé en ce que** l'antenne RFID découplée (20) fait office de détecteur de proximité capacitif et est connectée à un circuit de mesure de capacité au moins lorsqu'elle est découplée.

2. Équipement (1, 47) pour animal domestique selon la revendication 1, ledit équipement (1, 47) étant une mangeoire (1), le premier état permettant à l'animal d'accéder à la nourriture contenue dans la mangeoire (1) et le second état ne permettant pas à l'animal d'accéder à la nourriture contenue dans la mangeoire (1).

3. Équipement (1, 47) pour animal domestique selon la revendication 1, ledit équipement (1, 47) étant une chatière (47), déverrouillée dans le premier état et verrouillée dans le second état.
